# FASCICULE DE BREVET EUROPEEN

(11) **EP 0 444 539 B1**
(45) Date de publication et mention de la délivrance du brevet: **13.04.1994**
(21) Numéro de dépôt: 91102575.7
(22) Date de dépôt: 22.02.1991
(51) Int. Cl.: H02K 3/26

(54) **Ensemble formant bobines d'excitation, procédé de fabrication d'un tel ensemble et micromoteur électromagnétique équipé de celui-ci**
Erregerspulensatz, Verfahren zu dessen Herstellung und damit ausgestatteter Micromotor
Exciting coil set, method of fabricating the same and micromotor equipped therewith

(30) Priorité: 02.03.1990 FR 9002772
(43) Date de publication de la demande: 04.09.1991
(73) Titulaire: Eta SA Fabriques d'Ebauches, 2540 Granges (CH)
(72) Inventeur: Daho, Taghezout, CH-1006 Lausanne (CH)
(74) Mandataire: Caron, Gérard

(56) Documents cités:
- EP-A- 0 287 945

## Description

L'invention concerne un ensemble formant bobines d'excitation, de préférence destiné à équiper un micromoteur du type électromagnétique, ainsi qu'un procédé de fabrication d'un tel ensemble.

De même, elle concerne un micromoteur qui est équipé de cet ensemble et qui est destiné à être utilisé dans des applications très diverses où des transducteurs de force commandés électromagnétiquement doivent être extrêmement miniaturisés. Parmi ces nombreuses applications on compte notamment : l'horlogerie, la robotique, l'informatique, l'appareillage électronique de reproduction du son et de l'image, l'aéronautique et l'aérospatial, mais aussi l'ingénierie biomédicale.

Ce type de moteur est appelé micromoteur puisque, comme on le comprendra ci-après, certains de ses composants ont des dimensions très faibles, de l'ordre du micron (10⁻⁶ mètre).

Comme tout moteur électromagnétique, ces micromoteurs comportent une première pièce qui forme stator et une deuxième pièce qui est mobile par rapport à la première et qui forme rotor. Le rotor comporte généralement un aimant permanent. De plus, ces moteurs sont généralement équipés de plusieurs bobines d'excitation formées chacune par un enroulement d'un conducteur électrique isolé. Ces bobines sont couplées magnétiquement au rotor et sont reliées à un circuit électronique de commande qui leur fournit des impulsions de courant, dites impulsions motrices, permettant la mise en mouvement du rotor.

Dans le but d'améliorer la miniaturisation des moteurs électromagnétiques de ce type, on a déjà proposé de réaliser des bobines sur un plan, par des enroulements en spirale, ces bobines qui sont ménagées de façon coplanaire et qui sont appelées "galettes" ayant une faible épaisseur. Dans ce cas, le rotor est réalisé sous la forme d'un disque mince aimanté axialement qui crée, dans l'entrefer du circuit magnétique, des champs axiaux traversant les bobines qui sont disposées dans un plan parallèle au rotor.

Les premières bobines de ce type étaient réalisées à l'aide d'un fil de cuivre très fin. Ces bobines étaient délicates à réaliser et à connecter entre elles ainsi qu'au circuit de commande, et elles ont donc été très peu utilisées puisque d'une fabrication extrêmement coûteuse.

Plus récemment, il a été proposé, comme notamment décrit dans le brevet US-4 733 115, de réaliser des bobines sur un circuit imprimé. Cette technique, quoique donnant satisfaction pour la mise en oeuvre de petits moteurs, ne peut malheureusement pas être appliquée à la réalisation de micromoteurs, puisqu'elle ne permet pas de réaliser des bobines ayant des spires suffisamment fines pour assurer au moteur un bon rendement.

Pour répondre à ce problème, on a aussi proposé, dans la demande de brevet publiée CH 668 160, de réaliser des bobines d'excitation sur une plaquette de silicium, appelée aussi substrat semi-conducteur, et ce selon la technologie des circuits intégrés.

Cette technologie présente de nombreux avantages par rapport à la technologie des circuits imprimés puisqu'elle permet de réaliser des bobines dont les spires sont formées par un conducteur en aluminium dont la hauteur et la largeur sont extrêmement faibles, de l'ordre de 2 · 10⁻⁶ mètre (2 µm) et dont la résistance est de l'ordre de 2000 ohms. Ainsi, puisque cette résistance est très élevée, on peut limiter le courant de pile à une valeur inférieure au milliampère ce qui permet, notamment dans les applications horlogères, d'associer au micromoteur une source d'énergie d'une tension classique de l'ordre de 1,5 volts.

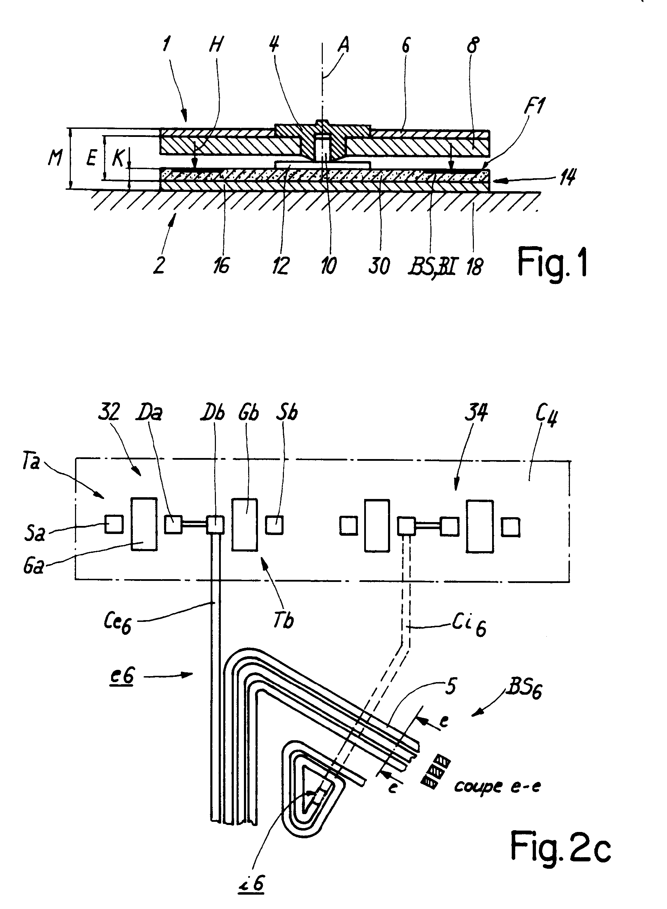

De plus, cette technologie permet de réaliser des ensembles formant bobines, c'est-à-dire des modules comprenant un substrat et plusieurs bobines réalisées en galettes sur celui-ci, d'une épaisseur K (figure 1) d'environ 280 · 10⁻⁶ mètre (280 µm).

On comprend donc qu'à partir de ces dimensions on puisse parler de miniaturisation et de "micro"-moteur convenant particulièrement à des applications telles que l'horlogerie ou l'ingénierie biomédicale.

Toutefois, on constate aujourd'hui que ces micromoteurs équipés de bobines intégrées offrent des rendements nettement insuffisants, si bien que leur commercialisation et leur industrialisation n'ont pas pu être envisagées.

De plus, au vu de la diversité des champs d'application qui s'offrent à ces moteurs, on souhaite pouvoir les faire fonctionner indifféremment comme moteur pas à pas unidirectionnel ou bidirectionnel, ou comme moteur à rotation continue de même unidirectionnel ou bidirectionnel.

Si on peut raisonnablement envisager d'utiliser le moteur qui est décrit dans la demande de brevet suisse susmentionnée comme moteur pas à pas, il faut toutefois reconnaître qu'il ne peut pas être employé indifféremment comme moteur à rotation continue ou comme moteur bi-directionnel.

En effet, ce type de moteur étant un moteur monophasé, d'une part il nécessite une électronique très compliquée et donc coûteuse s'il devait être utilisé comme moteur bidirectionnel, et d'autre part le contrôle de la position du rotor impose d'avoir des boucles de réaction qui entraînent des sophistications tout aussi onéreuses s'il devait être utilisé en rotation continue.

Ainsi, l'invention a-t-elle pour but de supprimer ces inconvénients en proposant un ensemble formant bobines d'excitation extrêmement miniaturisé, offrant un rendement suffisant pour présenter un intérêt commercial et dont la construction permette au micromoteur qui en est équipé d'être employé indifféremment comme moteur pas à pas, moteur à rotation continue, unidirectionnels ou bidirectionnels, et ce sans élévation des coûts de fabrication.

Aussi, l'invention a pour objet un ensemble formant bobines d'excitation d'un micromoteur électromagnétique, comprenant :
- un élément support de forme sensiblement plane, formé par un substrat semi-conducteur et par exemple destiné à être relié mécaniquement à un élément fixe,
- au moins une première bobine plane réalisée par métallisation pour former une première couche de bobine(s), au voisinage d'une face dudit substrat, caractérisé en ce qu'il comporte au moins une deuxième bobine plane formant une deuxième couche de bobine(s) superposée à la première, ces couches de bobine(s) formant un ensemble monolithique et intégré de plusieurs couches adjacentes respectivement supérieure et inférieure sur un même substrat.

Grâce à cette réalisation, on a pu améliorer de façon considérable le rendement du micromoteur, notamment grâce à l'action combinée des bobines superposées, et ce sans augmenter de manière sensible l'épaisseur du moteur.

De plus, l'invention concerne un procédé de fabrication d'un tel ensemble formant bobines d'excitation consistant à former sur une face d'un substrat semi-conducteur, par un processus photolithographique dit micro-usinage de surface :
- une première couche de bobines ainsi que simultanément certaines des connexions électriques de ces bobines avec un circuit de commande et/ou avec d'autres bobines,
- éventuellement une ou plusieurs jonctions "inter-plans", et
- de façon superposée à la première couche de bobines, une deuxième couche de bobines ainsi que certaines connexions électriques de ces bobines.

Ainsi, il est possible de réaliser un moteur du type polyphasé offrant un rendement supérieur à un moteur monophasé et pouvant être utilisé, avec un circuit électronique de commande de construction simple, comme moteur (a) pas à pas, (b) à rotation continue, ou (c) bidirectionnel.

Mais d'autres caractéristiques et avantages de l'invention apparaîtront à la lecture de la description détaillée qui suit, faite en référence aux dessins annexés qui sont donnés uniquement à titre d'exemple, et dans lesquels :
- la figure 1 est une vue en coupe d'un micromoteur selon l'invention;
- la figure 2 est une vue de dessus très schématique d'un premier mode de réalisation d'un ensemble formant bobines d'excitation selon l'invention, destiné à équiper le micromoteur de la figure 1;
- la figure 2a est une vue en coupe faite suivant la ligne IIa-IIa de la figure 2;
- la figure 2b est une vue en coupe faite selon la ligne IIb-IIb de la figure 2;
- la figure 2c est une vue plus détaillée d'une des bobines de l'ensemble de la figure 2, avec son élément de commande;
- les figures 3 et 4 sont des vues de dessus très schématiques, respectivement d'un deuxième et d'un troisième mode de réalisation d'un ensemble formant bobines d'excitation selon l'invention;
- la figure 5 représente, aussi de façon schématique, un quatrième mode de réalisation d'un ensemble formant bobines d'excitation selon l'invention, mais dans lequel les bobines des couches inférieures qui sont représentées en traits interrompus ont été sensiblement décalées par rapport aux bobines des couches supérieures pour une meilleure compréhension des dessins; et
- la figure 6 est une vue de dessus d'un cinquième mode de réalisation d'un ensemble formant bobines d'excitation selon l'invention.

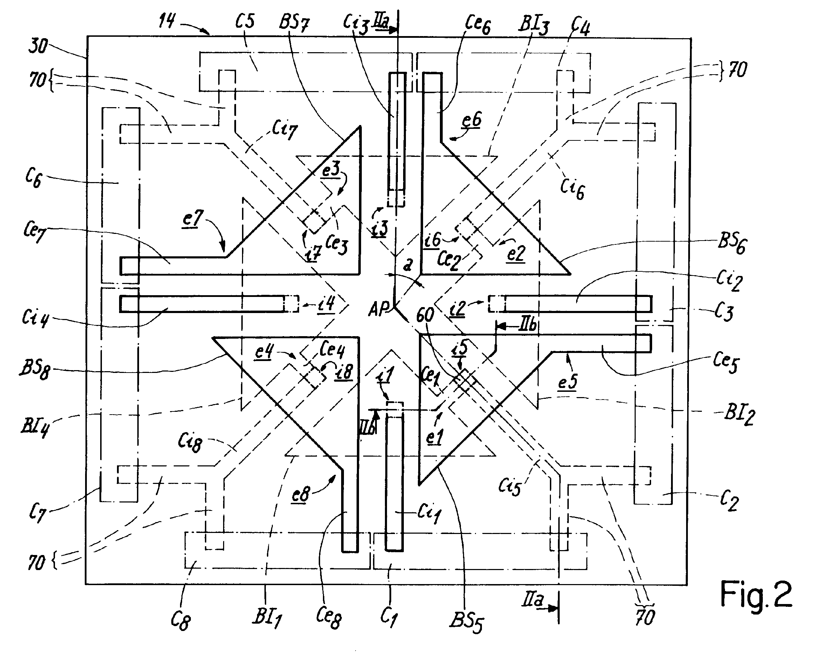

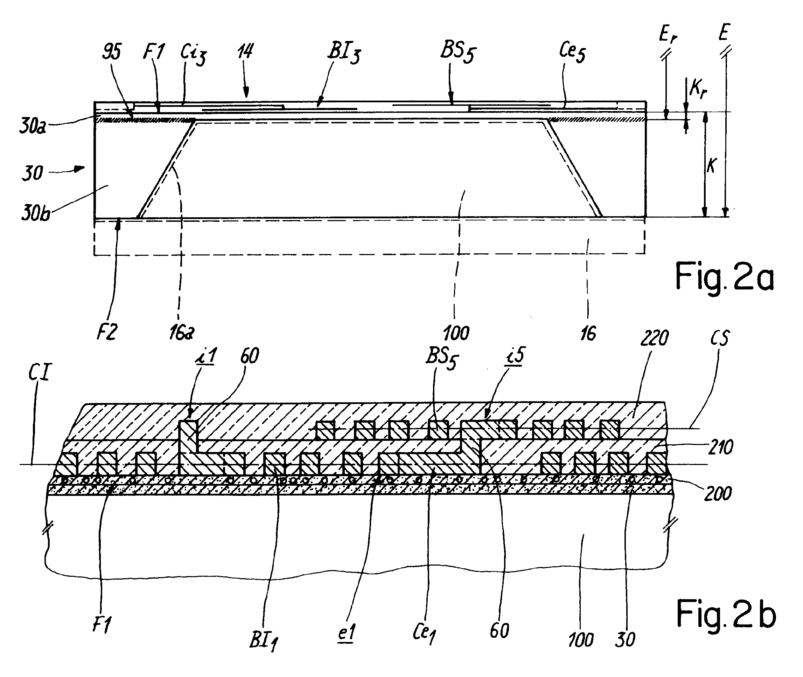

En se référant désormais à la figure 1, il est représenté un micromoteur selon l'invention pouvant être équipé d'un ensemble formant bobines d'excitation comme l'un de ceux représentés aux figures 2 à 5.

Ce micromoteur est constitué d'un élément mobile 1 formant rotor, susceptible de pivoter sur et par rapport à un élément fixe 2 formant stator, autour d'un axe géométrique de rotation A.

Le rotor 1 est constitué d'un manchon circulaire 4 formant palier, sur lequel sont montés fixement et de façon accolée, d'une part, un disque 6 en matériau magnétique doux à haute perméabilité magnétique, et d'autre part un disque aimanté 8 comportant un certain nombre de pôles magnétiques alternés disposés au voisinage de sa périphérie.

Le manchon 4 qui forme palier est monté pivotant sur un tenon 10 dont l'embase 12 est, dans cet exemple, posée et montée fixement sur un ensemble formant bobines d'excitation 14.

En plus de cet ensemble formant bobines 14 et de l'ensemble tenon 10 - embase 12, le stator 2 comporte un disque circulaire 16 en matériau magnétique doux à haute perméabilité magnétique disposé sur la face arrière de l'ensemble de bobines d'excitation 14, entre celui-ci et une pièce formant bâti 18.

L'espace de hauteur E, laissé entre les deux disques respectivement 6 et 16, constitue un entrefer dans lequel sont disposés l'un en regard de l'autre le disque aimanté 8 et l'ensemble formant bobines d'excitation 14.

Le disque aimanté 8, qui peut être réalisé en ferrite ou en samarium-cobalt, crée, grâce à ses pôles magnétiques, des champs magnétiques H dans l'entrefer E, notamment aux endroits où se trouvent des bobines BS et BI ménagées dans l'ensemble 14, comme on l'expliquera ci-après.

Les champs magnétiques H ont tous sensiblement la même orientation et ils sont orientés de façon parallèle à l'axe de rotation du rotor 1, le sens de ces champs axiaux étant toutefois alterné. En dehors de l'entrefer, les champs magnétiques H sont canalisés d'un pôle magnétique au pôle adjacent par les disques 6 et 16.

Le fonctionnement d'un tel micromoteur est celui d'un moteur électromagnétique classique et il ne sera donc pas décrit ici de façon détaillée.

En se référant désormais aux figures 2, 2a et 2b, il est représenté un premier mode de réalisation d'un ensemble formant bobines d'excitation 14 selon l'invention.

Cet ensemble 14 comporte un élément support 30 de forme sensiblement plane, constitué par une plaquette de silicium généralement appelée substrat semi-conducteur. Dans cet exemple, le substrat semi-conducteur 30 a une forme de parallèlogramme, mais il est bien entendu qu'il peut avoir une forme circulaire. Sur une face F1 (figure 1) de ce substrat semi-conducteur 30, qui est destinée à être orientée de préférence en regard du disque aimanté 8 du rotor 1, sont ménagés (figure 2) plusieurs enroulements BIₙ, en traits interrompus, et BSₙ, en traits continus, qui sont ici représentés de façon très schématique en plan sous la forme de triangles.

Sur la figure 2, ainsi que sur les figures suivantes, les enroulements représentés en traits interrompus forment un premier groupe de bobines BI₁ à BI₄ (référencé BI₁₋₄) dites bobines inférieures.

Ces bobines BI₁₋₄ qui sont ici à titre d'exemple au nombre de quatre, sont disposées les unes par rapport aux autres de façon sensiblement coplanaire, leur enroulement étant tel qu'elles présentent de préférence la forme d'un triangle quasi-isocèle. Ce premier groupe de bobines BI₁₋₄ fait donc partie sur le substrat semi-conducteur 30 d'une première couche CI qui forme, comme on le voit sur la figure 2b, une couche inférieure.

Avantageusement, l'ensemble formant bobines d'excitation 14 comporte un deuxième groupe de bobines BS₅ à BS₈ (référencé BS₅₋₈), de même ménagé sur la face F1 du substrat semi-conducteur 30.

Ce deuxième groupe de bobines BS₅₋₈ est donc réalisé, comme le premier groupe précité, sur la face du substrat semi-conducteur 30 que l'on oriente de préférence en regard du rotor 1. Ce deuxième groupe de bobines BS₅₋₈ forme sur une deuxième couche CS, dite couche supérieure, qui est ménagée au-dessus de la première couche CI. Les bobines BS₅₋₈ du deuxième groupe ont sensiblement la même forme que les bobines inférieures BI₁₋₄ du premier groupe et elles sont de même, dans cet exemple, au nombre de quatre. Elles sont réalisées les unes par rapport aux autres de façon sensiblement coplanaire et on remarque que la couche supérieure CS de bobines BS₅₋₈ est superposée à la couche inférieure CI.

Toutes ces bobines sont pourvues de connexions électriques qui permettent la liaison entre des éléments de commande C₁ à C₈ (référencé C₁₋₈) et les bornes extérieures e et intérieures i de ces bobines.

On désignera ci-après par connexion électrique "extérieure" Ceₙ une piste d'alimentation reliée à une borne extérieure d'une bobine, tandis qu'on désignera par connexion électrique "intérieure" Ciₙ une piste d'alimentation reliée à une borne intérieure.

Dans le mode de réalisation représenté sur la figure 2, chaque bobine du premier ou du second groupe est susceptible d'être commandée indépendamment des autres bobines, et ce grâce à la disposition de huit éléments de commande C₁ à C₈.

L'un de ces éléments de commande, C₄, ainsi qu'une des bobines , BS₆, sont représentés de façon plus détaillée sur la figure 2c. On précisera que les éléments de commande ont été décrits dans les modes de réalisation de l'invention comme étant ménagés sur le même substrat que les bobines, mais ils peuvent être réalisés sur des substrats indépendants.

L'élément de commande C₄ est constitué de deux inverseurs 32 et 34 qui font partie d'un circuit de commande qui n'a pas été représenté. Un tel circuit de commande comporte généralement, dans une application horlogère, une base de temps stabilisée en fréquence par un résonateur à quartz, un diviseur de fréquence et un circuit de mise en forme des signaux attaquant les inverseurs 32 et 34. Ainsi, les inverseurs 32 et 34 fournissent aux bobines, et notamment dans ce cas à la bobine BS₆, des impulsions motrices polarisées. Ce circuit de commande dont font partie les inverseurs 32 et 34 est alimenté en énergie par une pile disposée dans une montre. Le fonctionnement et la structure de ces éléments étant largement connus en soi, ils ne seront pas davantage décrits.

Les inverseurs 32 et 34 ont des structures identiques. Chaque inverseur est formé de deux transistors complémentaires CMOS référencés Ta et Tb, chaque transistor comportant une source, une grille et un drain, notés respectivement Sa, Ga et Da pour le premier transistor Ta, et Sb, Gb et Db pour le second transistor Tb. Les drains Da et Db sont reliés ensemble et ils forment la sortie de l'inverseur 32. Cette sortie est connectée à la borne extérieure e6 de la bobine BS₆ par l'intermédiaire d'une connexion électrique extérieure Ce₆. La sortie de l'inverseur 34 est quant à elle reliée à la borne intérieure i6 de la bobine BS₆ par l'intermédiaire d'une connexion électrique intérieure Ci₆.

Comme on le voit sur la figure 2c, les bobines d'excitation sont formées respectivement par un enroulement coaxial et plan d'un conducteur électrique 5 dont la section transversale est sensiblement rectangulaire. Comme on le comprendra ci-après, ce conducteur ainsi que de préférence les connexions électriques Ceₙ et Ciₙ auxquelles il est relié, sont constitués par des pistes ou métallisations structurées par un procédé photolithographique.

En se reportant désormais à la figure 2, on remarquera que les bornes extérieures e1, e2, e3 et e4 des bobines BI₁₋₄ du groupe inférieur sont respectivement reliées par des jonctions "inter-plans" 60 aux bornes intérieures i5, i6, i7 et i8 des bobines voisines BS₅₋₈ du groupe supérieur. Dans le mode de réalisation représenté à la figure 2, on a choisi de relier la borne extérieure des bobines qui sont ménagées dans le plan inférieur CI avec la borne intérieure correspondante de l'une des bobines du plan supérieur CS, mais on aurait pu réaliser une disposition inverse, à savoir la liaison commune de chaque borne extérieure des bobines du groupe supérieur avec une borne intérieure correspondante de l'une des bobines du groupe inférieur. On appelle ici jonctions "inter-plans", tel que représenté en coupe en 60 à la figure 2b et en vue de dessus en traits mixtes moyens sur la figure 2, des liaisons électriquement conductrices qui sont formées par des métallisations verticales entre les plans ou couches supérieur CS et inférieur CI et qui s'étendent donc dans une direction perpendiculaire à ces plans.

Les bornes extérieures e1 à e4 des bobines inférieures BI₁ à BI₄ sont reliées à des jonctions "inter-plans" 60 correspondantes par des connexions électriques extérieures Ce₁ à Ce₄ qui forment une liaison électrique commune entre chaque bobine inférieure BI₁₋₄ et l'une des bobines supérieures BS₅₋₈.

De plus, chaque jonction "inter-plans" 60 est reliée à une connexion électrique s'étendant vers l'extérieur des groupes de bobines. Dans ce cas, il s'agit des connexions électriques Ci₅ à Ci₈ qui relient les bornes intérieures i5 à i8 des bobines BS₅ à BS₈ du groupe supérieur aux éléments de commande correspondants.

Ces connexions électriques Ci₅₋₈ se terminent en une dérivation dont chaque branche 70 est reliée à un élément de commande C₁₋₈. Ainsi, la borne extérieure et la borne intérieure de deux bobines adjacentes ménagées dans des plans superposés sont reliées électriquement à des éléments de commande distincts par une connexion électrique formant une alimentation commune (les connexions Ci₅ à Ci₈), ce qui permet de diminuer considérablement la longueur totale de toutes les connexions électriques à ménager sur le substrat semi-conducteur 30.

On a donc ici une association par paires de bobines, chaque paire comportant une bobine inférieure et une bobine supérieure.

Dans ce mode de réalisation, toutes les connexions électriques extérieures Ce₁₋₈ et intérieures Ci₁₋₈, les jonctions "inter-plans" 60 et les branches 70 sont ménagées sur le substrat semi-conducteur 30 par la même technique que pour les bobines elles-mêmes. Cette technique est identique à celle permettant la fabrication des circuits intégrés MOS, et elle consiste, d'une part, à déposer par des dépôts chimiques en phase vapeur plusieurs couches, dites couches minces, d'un matériau conducteur de préférence métallique, tel que l'aluminium. D'autre part, elle consiste à structurer, à l'aide de masques et d'attaques, par exemple chimiques, les couches déposées pour ne laisser que certaines parties en saillie qui forment, entre autres, les pistes 5 (figure 2c) et les jonctions "inter-plans" 60. Les connexions électriques extérieures et intérieures, les branches de ces connexions et les jonctions "inter-plans" ont été représentées ici de façon très schématique, leur section étant en vérité très faible. Cette section est à peu près celle des spires (formées par les pistes 5) de chacune des bobines des plans supérieur et inférieur, ces dernières ayant une hauteur et une largeur d'environ 2 · 10⁻⁶ mètre (2 µm). On précisera que chaque bobine comporte environ 150 spires, chaque bobine et par conséquent chaque spire ayant une résistance de l'ordre de 2000 Ohms. On comprend que dans ces conditions l'ensemble formant bobines d'excitation 14 peut être alimenté avec des courants très faibles inférieurs au milliampère. Ainsi, on peut associer au micromoteur selon l'invention une pile d'alimentation de très faible tension, de l'ordre de 1,5 V.

On observera par ailleurs que dans le mode de réalisation représenté à la figure 2, chacune des connexions électriques intérieures Ci₅₋₈ qui forme l'alimentation commune de deux bobines situées dans des plans différents, est disposée dans le même plan que la bobine à la borne extérieure de laquelle cette connexion est reliée. En effet, les connexions électriques intérieures Ci₅₋₈ sont réalisées dans le même plan que les bobines BI₁₋₄ du plan inférieur CI. De plus, les connexions électriques extérieures Ce₁₋₄ des bobines inférieures BI₁₋₄ sont ménagées dans le même plan que les connexions Ci₅₋₈. On remarquera aussi que les connexions électriques intérieures Ci₁₋₄ des bobines du groupe inférieur BI₁₋₄ sont disposées dans le même plan que les bobines BS₅₋₈ du groupe, tandis que les connexions électriques intérieures Ci₅₋₈ des bobines BS₅₋₈ du groupe supérieur sont disposées dans le même plan que les bobines BI₁₋₄ du groupe inférieur. Cette disposition est particulièrement avantageuse puisqu'elle permet, lors de la métallisation, d'utiliser le même masque pour les connexions électriques et les bobines qui sont ménagées dans le même plan, ce qui entraîne une simplification des masques et une réduction du temps de fabrication et des coûts.

Dans la disposition que l'on vient de décrire, les première et deuxième couches CI et CS comportent un nombre égal n de bobines choisi dans cet exemple égal à 4, les bobines BI₁₋₄ de la première couche, à savoir la couche inférieure CI, étant décalées angulairement sur le substrat par rapport aux bobines BS₅₋₈ de la deuxième couche, à savoir la couche supérieure CS, et cela d'un angle a d'environ 180/n degrés, c'est-à-dire de 45°. Le micromoteur selon l'invention qui est équipé de l'ensemble formant bobines d'excitation 14 précédemment décrit peut fonctionner comme moteur pas à pas, moteur bi-directionnel ou moteur à rotation continue sans adjonction d'un circuit électronique de commande compliqué, puisque cet ensemble formant bobines d'excitation peut être alimenté par deux courants déphasés constituant une alimentation biphasée. De plus, puisque ce micromoteur peut fonctionner comme moteur biphasé, il offre, notamment lors de son fonctionnement comme moteur pas à pas, un rendement nettement meilleur que celui des moteurs monophasés.

Bien évidemment, l'invention n'est pas limitée à la construction des moteurs biphasés puisqu'il est possible de déposer sur le substrat semi-conducteur 30 de nombreuses couches de bobines superposées les unes aux autres et judicieusement décalées les unes par rapport aux autres.

On précisera que dans le cas d'un moteur polyphasé comportant M phases, le décalage angulaire entre les bobines des couches adjacentes qui correspondent respectivement à une phase est de 360°/n x N.

Les bobines BI₁₋₄ et BS₅₋₈ sont décalées angulairement les unes par rapport aux autres, autour d'un axe géométrique AP qui est normal au substrat 30 et qui est mis en coïncidence avec l'axe de rotation A du micromoteur.

On remarquera ainsi que l'orientation des bobines est telle que les sommets des triangles qu'elles forment convergent les uns en direction des autres, vers l'axe géométrique central AP.

Dans ce mode de réalisation, les bornes d'alimentation extérieurs e1-8 et intérieures i1-8 forment indifféremment les bornes d'entrée ou de sortie du courant. Toutefois, il est préférable que ces bornes et le sens d'enroulement des bobines soient choisis de sorte que les courants circulant dans les bobines qui se chevauchent partiellement, c'est-à-dire les bobines adjacentes supérieure et inférieure, circulent dans ces bobines selon des sens opposés.

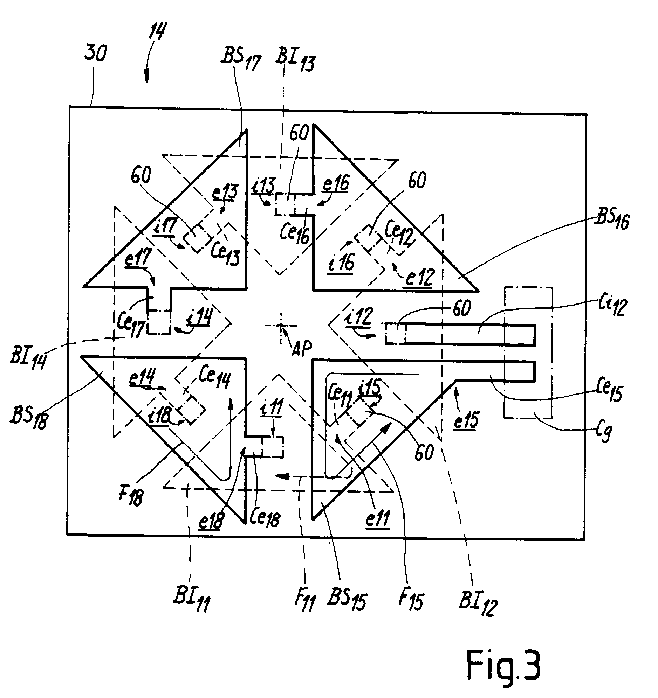

En se référant désormais à la figure 3, il est représenté un deuxième mode de réalisation d'un ensemble 14 formant bobines d'excitation selon l'invention, dans lequel les bobines des couches supérieure et inférieure sont reliées entre elles en série. Dans ce mode de réalisation les deux groupes de bobines BI₁₁₋₁₄ et BS₁₅₋₁₈ ont la même disposition que les deux groupes de bobines BI₁₋₄ et BS₅₋₈ de la figure 2. Les deux groupes de bobines de ce second mode de réalisation sont orientés et sont décalés angulairement l'un par rapport à l'autre autour de l'axe géométrique AP, d'une façon identique au premier mode de réalisation. Les métallisations 60 entre les plans inférieur CI et supérieur CS sont aussi représentées par des traits mixtes moyens.

La borne extérieure de chaque bobine d'un des groupes est reliée à la borne intérieure correspondante d'une bobine adjacente de l'autre groupe, à l'exception d'une bobine BS₁₅, dont à la borne extérieure, au lieu d'être reliée à la borne intérieure d'une bobine adjacente est reliée en parallèle avec cette dernière borne intérieure à un élément de commande C9. On comprend donc que la borne extérieure de n-1 bobines (3 bobines dans ce cas) de l'une des couches, c'est-à-dire la couche supérieure CS, est reliée à la borne intérieure de l'une de n-1 bobines de l'autre couche, à savoir la couche inférieure CI. Les bornes extérieures et intérieures qui sont reliées ensemble sont connectées ici aussi par une jonction "inter-plans" 60 qui s'étend verticalement des bornes intérieures et qui se prolonge orthoganalement uniquement par une connexion électrique extérieure Ce₁₁, Ce₁₂, Ce₁₃, Ce₁₄ et Ce₁₆ à Ce₁₈ reliée à une borne extérieure correspondante.

Par ailleurs, les bornes extérieures des n bobines BI₁₁₋₁₄ de la couche inférieure CI sont respectivement reliées aux bornes intérieures des n bobines (4) BS₁₅₋₁₈ de la couche supérieure CS. On remarque que dans ce mode de réalisation, la longueur totale des connexions électriques est extrêmement faible, ce qui correspond à une économie de métallisation. En effet, les bornes intérieures des n bobines supérieures et de n-1 bobines inférieures ne comportent aucune connexion électrique propre, mais utilisent celles des bornes extérieures des bobines de l'autre plan, auxquelles elles sont reliées.

Si dans le mode de réalisation de la figure 2 le sens d'enroulement des spires des bobines est indifférent puisque chaque bobine peut être alimentée indépendamment des autres, dans ce second mode, il est toutefois préférable que les bobines adjacentes de couches différentes, qui sont superposées et se chevauchent, présentent un enroulement réalisé dans des sens opposés. Sur la figure 3, les flèches F₁₁, F₁₅ et F₁₈ représentent respectivement le sens d'enroulement des spires des bobines BI₁₁, BS₁₅ et BS₁₈.

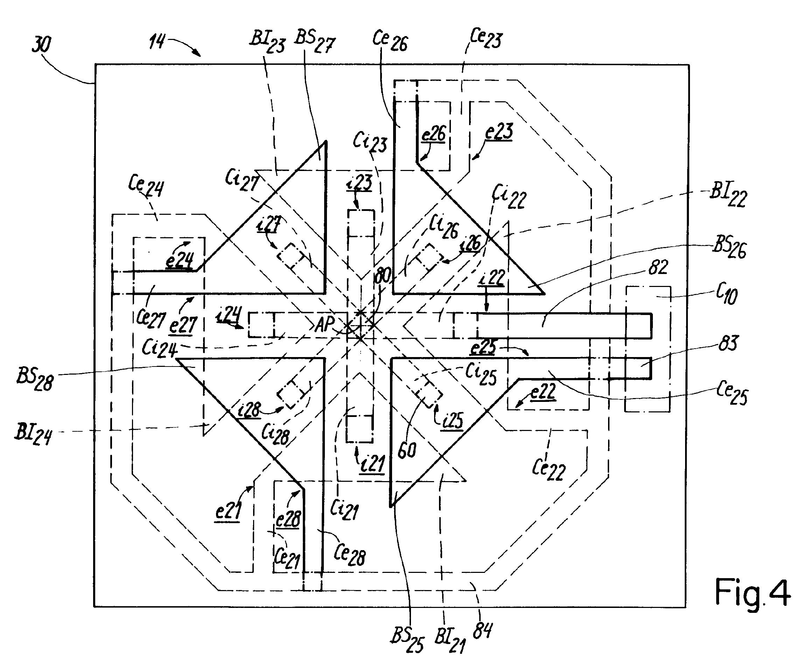

Dans le troisième mode de réalisation de l'ensemble 14 formant bobines d'excitation selon l'invention qui est représenté à la figure 4, toutes les bobines BI₂₁₋₂₄ et BS₂₅₋₂₈, qui sont disposées de façon identique aux bobines des deux premiers modes de réalisation, sont connectées entre elles en parallèle. Ici, les bornes intérieures i21-28 de toutes les bobines de cet ensemble, c'est-à-dire des bobines de chaque groupe, sont reliées ensemble par des connexions électriques intérieures Ci₂₁₋₂₈ convergeant vers le centre de l'ensemble 14 et qui sont reliées entre elles, en ce point, par une jonction centrale formée par une jonction "inter-plans" 80 située sensiblement au centre du substrat semiconducteur 30, sur l'axe géométrique AP destiné à venir en coïncidence avec l'axe de rotation A du rotor.

Les bornes intérieures i21 à i28 de toutes les bobines sont reliées respectivement à des jonctions inter-plans" 60 qui sont elles-mêmes connectées respectivement à des connexions électriques Ci₂₁ à Ci₂₈.

On remarquera que les bobines BI₂₁ à BI₂₄ du plan inférieur CI sont connectées électriquement à des connexions électriques intérieures Ci₂₁ à Ci₂₄ réalisées dans le plan supérieur, et inversement pour les bobines BS₂₅ à BS₂₈ du plan supérieur.

Ainsi, pour les deux couches, chaque bobine est ménagée dans un autre plan que la connexion électrique intérieure qui lui est associée.

Une borne intérieure de l'une des bobines, dans cet exemple la bobine BI₂₂, comporte une connexion électrique supplémentaire 82 qui est ménagée dans le prolongement de la connexion électrique intérieure Ci₂₂ de cette bobine. Cette connexion électrique supplémentaire 82 s'étend vers l'extérieur de l'ensemble 14 formant bobines d'excitation et elle est reliée à un élément de commande unique C₁₀. De plus, toutes les bornes extérieures e21 à e28, c'est-à-dire les bornes extérieures des bobines inférieures BI₂₁₋₂₄ et supérieures BS₂₅₋₂₈, sont reliées entre elles par une connexion électrique périphérique 84 qui entoure partiellement les bobines et qui est reliée à l'élément de commande C₁₀ par l'une des connexions électriques extérieures, soit la connexion Ce₂₅ qui présente un prolongement 83.

Dans cet exemple, les bornes extérieures des bobines supérieures BS₂₅ à BS₂₈ sont reliées respectivement à des connexions électriques extérieures Ce₂₅₋₂₈ réalisées dans le plan supérieur, et les bornes extérieures des bobines inférieures BI₂₁ à BI₂₄ sont reliées respectivement à des connexions électriques extérieures Ce₂₁₋₂₄ réalisées dans le plan inférieur. Ainsi, chaque bobine est réalisé dans le même plan que la connexion électrique extérieure qui lui est associée.

La connexion électrique périphérique 84 est réalisée, dans ce mode de réalisation, dans le plan inférieur CI. Elle est donc directement connectée aux connexions électriques extérieures Ce₂₁ à Ce₂₄ des bobines inférieures, tandis qu'elle est connectée aux connexions électriques extérieures Ce₂₅ à Ce₂₈ des bobines supérieures par l'intermédiaire de jonctions "inter-plans" 60 prévues respectivement à l'extrémité de ces connexions Ce₂₅₋₂₈.

On observera aussi que la connexion électrique supplémentaire 82 est réalisée dans un plan superposé et supérieur à celui de la connexion électrique périphérique 84.

Dans ce mode de réalisation les bornes extérieures et intérieures des bobines peuvent former indifféremment les bornes d'entrée et de sortie du courant. Toutefois, il est préférable que les enroulements des bobines se chevauchant, situées sur des couches différentes, soient réalisés selon des sens opposés (ce sens d'enroulement ayant pour origine, par convention, le centre de la bobine, c'est-à-dire sa borne intérieure).

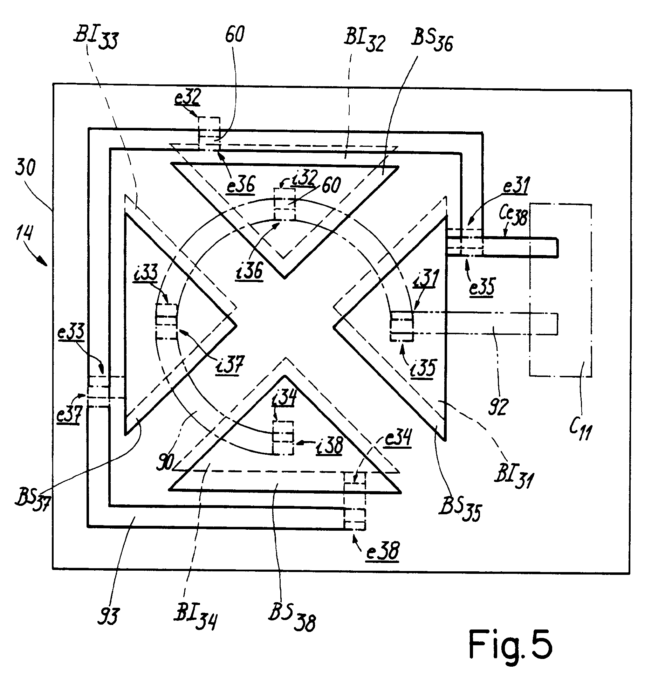

La figure 5 représente un quatrième mode de réalisation de l'ensemble 14 formant bobines d'excitation selon l'invention. Dans ce mode de réalisation chaque bobine d'un des groupes, par exemple le groupe supérieur, est disposée coaxialement à l'une des bobines de l'autre groupe, de sorte que les bobines BS₃₅₋₃₈ du groupe supérieur sont disposées de façon exactement superposée aux bobines BI₃₁₋₃₄ du groupe inférieur. Ainsi, les bornes extérieure et intérieure des bobines d'un des plans sont respectivement disposées au droit des bornes extérieure et intérieure des bobines de l'autre plan. Chaque borne extérieure dans le plan inférieur est donc reliée par une jonction "inter-plans" 60 à une borne extérieure correspondante qui lui est directement superposée dans le plan supérieur et en coïncidence, chaque borne intérieure dans le plan inférieur étant connectée de façon identique à une borne intérieure superposée dans le plan supérieur.

Sur la figure 5, les bobines BI₃₁₋₃₄ de la couche inférieure CI ont été représentées de façon sensiblement décalée par rapport aux bobines BS₃₅₋₃₈ de la couche supérieure CS uniquement pour une meilleure compréhension du dessin. Ces bobines sont toutes reliées en parallèle, les bornes intérieures i31-i38 étant reliées entre elles par exemple par un canal de conduction diffusé 90 qui est par exemple du type (p), cette connexion électrique 90 passant sous les bobines BI₃₁₋₃₄ du groupe inférieur.

Ce canal de conduction 90 peut être constitué par une métallisation structurée ou piste formant une couche sous-jacente aux deux autres couches de bobines.

Par ailleurs, la borne intérieure de l'une des bobines du groupe inférieur, par exemple la bobine BI₃₁, est reliée à un élément de commande C₁₁ par l'intermédiaire d'une connexion électrique 92 également constitué par un canal de conduction diffusé ou par une métallisation sous-jacente. Comme dans le mode de réalisation précédent, les bornes extérieures e31-e38 sont toutes reliées entre elles par une connexion électrique périphérique 93 partielle, ménagée, dans cet exemple, dans le plan supérieure CS. Les bornes extérieures et intérieures forment indifféremment l'entrée ou la sortie du courant. Toutefois, les enroulements des spires des bobines superposées doivent être réalisés dans des sens identiques (par rapport à l'origine que forme la borne intérieure de ces bobines). Dans ce mode de réalisation, on obtient un rendement particulièrement élevé grâce à la coopération entre les bobines de chaque groupe qui sont superposées les unes par rapport aux autres. Bien évidemment, cet empilement de bobines sur la même plaquette de silicium 30 n'est pas limité à deux couches mais peut s'étendre à plusieurs.

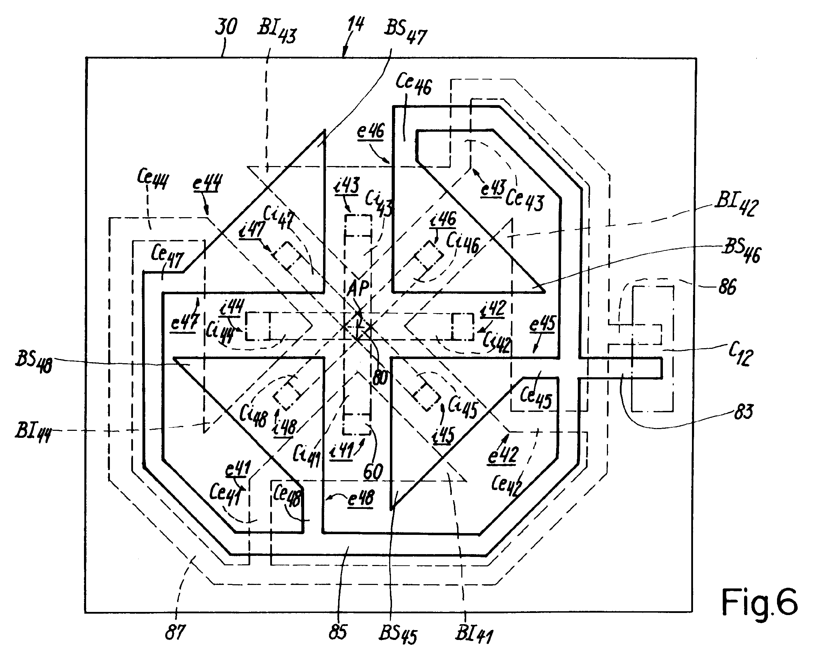

En se référant à la figure 6, il est représenté un cinquième mode de réalisation dans lequel les bobines de chaque couche (formant un groupe) sont reliées entre elles en parallèle, tandis que les groupes de bobines sont reliés entre eux en série.

Comme dans le mode de réalisation de la figure 4, les bornes intérieures i41 à i44 des bobines BI₄₁₋₄₄ de la couche inférieure CI sont reliées entre elles par des connexions électriques intérieures Ci₄₁ à Ci₄₄ formées par des métallisations ou pistes qui convergent vers le centre de l'ensemble 14, et plus particulièrement vers l'axe AP du substrat 30.

Ces connexions Ci₄₁₋₄₄ s'intersectent au voisinage de cet axe AP et sont reliées au niveau de cet intersection à une jonction "inter-plans" centrale 80.

De même, les bornes intérieures i45 à i48 des bobines BS₄₅₋₄₈ sont reliées électriquement entre elles par des connexions convergentes Ci₄₅ à Ci₄₈. Ces connexions sont aussi reliées à la jonction "inter-plans" 80 à l'endroit de leur intersection .

Ainsi toutes les bornes intérieures de ces bobines sont connectées électriquement entre elles.

Par ailleurs, les bornes extérieures e41-44 des bobines inférieures sont connectées à une connexion périphérique partielle 87 par l'intermédiaire des connexions électriques extérieures correspondantes Ce₄₁₋₄₄. Cette connexion 87 est réalisée de préférence sur la couche inférieure CI.

Les bornes extérieures e45-48 des bobines supérieures sont connectées à une autre connexion périphérique partielle 85 par l'intermédiaire des connexions extérieures Ce₄₅₋₄₈ de ces bobines. La connexion 85 est réalisée de préférence sur la couche supérieure. Ainsi, cet ensemble de bobines 14 comporte deux connexions périphériques partielles 85 et 87 reliées respectivement à un groupe de bobines et ménagées dans des plans différents (supérieur ou inférieur). Ces connexions périphériques sont chacune pourvues de connexions 86 et 83 qui les relient à un élément de commande unique C₁₂. Dans cet exemple, les bornes extérieures et intérieures peuvent aussi former, soit l'entrée, soit la sortie du courant.

Toutefois, il est préférable que les enroulements des spires des bobines se chevauchant soient réalisés (par rapport à la borne intérieure) selon des sens identiques. Ce mode de réalisatiom est particulièrement avantageux puisqu'il permet de diminuer la résistance globale du circuit électrique que forment les bobines.

En se référant désormais aux figures 2a et 2b, on comprendra que les ensembles de bobines qui viennent d'être décrits sont extrêmement avantageux puisqu'ils permettent d'améliorer le rendement d'un micromoteur et offrent la possibilité de le faire fonctionner indifféremment comme moteur pas à pas, moteur bidirectionnel ou moteur à rotation continue, sans toutefois augmenter son épaisseur.

En effet, comme on le remarque sur les figures 2a et 2b, le substrat semi-conducteur 30 peut être évidé sur sa face arrière F2 pour obtenir une creusure 100 dans laquelle est destiné à venir se loger au moins en partie le deuxième disque en matériau magnétique doux 16 qui constitue une partie statorique (représenté ici en traits interrompus), afin de diminuer de façon considérable la hauteur de l'entrefer d'une valeur E à une valeur Eᵣ. Cette creusure 100 qui est appelé généralement "baignoire", est réalisée par attaque chimique dans le monocristal formant le substrat 30, soit dans un premier cas dans un temps contrôlé, soit dans un deuxième cas par diffusion préalable dans le substrat semi-conducteur 30 d'atomes de bore qui stoppent l'attaque chimique.

Ainsi, le substrat 30 à l'endroit où il est creusé, c'est-à-dire sous les bobines, passe d'une épaisseur K d'environ 500 · 10⁻⁶ mètre (500 µm) à une épaisseur réduite Kᵣ d'environ 60 à 80 · 10⁻⁶ mètre (60 à 80 µm). Le substrat semi-conducteur 30 est donc formé de deux parties caractéristiques 30a et 30b. Dans la partie 30b vient donc se loger le disque 16 qui comporte à cet effet une protubérance 16a de forme sensiblement tronconique complémentaire à la creusure 100. La partie 30b présente une forme annulaire permettant de rigidifier l'ensemble 14 formant bobines, ce qui évite sa cassure lors des manipulations et du montage.

On précisera en effet que le substrat 30, sous les bobines, c'est-à-dire dans la partie 30a, forme une "membrane" si fine qu'il est nécessaire de la supporter mécaniquement par la partie 30b.

Dans le cas où l'on souhaite former une couche d'atomes de bore pour limiter en profondeur l'attaque chimique, la partie 30b constitue une base dans laquelle on diffuse une couche de bore 95 et sur laquelle on a élevé une couche épitaxiale 30a qui forme une autre partie du substrat semi-conducteur 30. C'est sur cette couche épitaxiale 30a que l'on vient réaliser les couches successives de bobines de façon superposée, ainsi qu'éventuellement les éléments de commande C₁ à C₁₁.

Dans le procédé de fabrication des modes de réalisation qui viennent d'être décrits, on forme sur la face F1 du substrat semiconducteur 30, la première couche CI de bobines BI avec de préférence simultanément certaines connexions électriques extérieures Ce et/ou intérieures Ci, on isole électriquement les bobines BI réalisées, on forme les jonctions "inter-plans" 60 puis on forme au-dessus de la première couche CI de bobines BI et de façon superposée, une deuxième couche CS de bobines BS ainsi que certaines connexions électriques de ces bobines.

Plus particulièrement, avant dépôt des premières bobines BI de la couche inférieure CI, on forme sur le substrat 30, par oxydation à haute température, une couche électriquement isolante 200, dite couche de passivation. Ensuite, sur cette couche 200 qui présente une épaisseur de quelques angströms (10⁻¹⁰ mètre), on structure par photolithographie (c'est-à-dire par micro-usinage de surface) les bobines BI de la couche inférieure CI et certaines connexions électriques. Ensuite, on recouvre ces bobines BI d'une couche isolante 210 constituée par un matériau tel que celui connu sous l'abréviation anglaise "PSG" (Phospho Silicate Glass), c'est-à-dire par du verre dopé au phosphore, puis, on attaque chimiquement cette couche isolante 210 aux endroits où devront être réalisées les jonctions "inter-plans". On réalise ces jonctions "inter-plans" pour ensuite structurer par le même processus photolithographique, la seconde couche de bobines BS ainsi que certaines connexions électriques.

Enfin on recouvre la deuxième couche de bobines BS par une couche isolante et protectrice 220, par exemple constituée par la même matière que la couche 210. Cette couche forme au-dessus des bobines respectivement une pellicule de l'ordre de 1 · 10⁻⁶ mètre (1 µm) d'épaisseur, chaque "strate" formée par une couche de bobines et une couche isolante présentant une épaisseur d'environ 3 · 10⁻⁶ mètre (3 µm).

En se référant à nouveau aux figures 2 et 2a, on remarquera que grâce à la disposition des bobines et des couches telle qu'elle est proposée, on peut réaliser, en même temps que la première couche CI de bobines BI₁₋₄, les connexions électriques Ci₅₋₈ de la seconde couche CS et réciproquement, réaliser en même temps que les bobines BS₅₋₈ de la seconde couche CS, les connexions électriques Ci₁₋₄ de la première couche CI. De manière générale, on peut réaliser simultanément les bobines et la connexions électriques réalisées dans le même plan, c'est-à-dire sur la même couche. On comprend donc que par ce procédé on réalise avec un minimum de masques et en un minimum de temps au moins deux couches de bobines sur un même substrat et de façon superposée sans augmenter de façon sensible l'épaisseur du micromoteur.

De plus, on comprend que cet empilement de bobines permet d'augmenter le rendement du micromoteur, soit par une augmentation de volume du matériau conducteur, comme c'est le cas notamment lorsque les bobines sont directement superposées, soit par un fonctionnement du micromoteur en mode polyphasé, dans le cas de groupes de bobines angulairement décalés. Ces deux caractéristiques sont bien entendu combinables de façon très avantageuse. Cet empilement étant réalisé sur un même substrat (figures 2a et 2b) on comprend que l'empilement de plusieurs couches ne conduit qu'à une très faible surépaisseur de l'ensemble de bobines (quelques microns par "strate" de bobines) ce qui n'augmente pas de façon sensible l'épaisseur du micromoteur.

En plus de tous ces avantages, la réalisation de ces empilements sur un seul et unique substrat permet de diminuer la valeur de l'entrefer (ce qui améliore encore le rendement du micromoteur) en évidant la partie arrière de ce substrat.

Dans tous les modes de réalisation susmentionnés, les couches supérieure CS et inférieure CI ont été décrites avec plusieurs bobines. Bien entendu, l'invention n'est pas limitée à cet exemple et pourrait comporter une seule bobine par couche.

Par ailleurs, on peut réaliser un nombre de couches beaucoup plus important que deux et prévoir plus que quatre bobines par couche.

## Revendications

1. Ensemble formant bobines d'excitation comprenant :
- un élément support (30) de forme sensiblement plane, formé par un substrat semi-conducteur;
- au moins une première bobine plane (BI) réalisée par métallisation pour former une première couche (CI) de bobine(s), au voisinage d'une face (F1) du substrat (30), caractérisé en ce qu'il comporte au moins une deuxième bobine plane (BS) formant une deuxième couche de bobine(s) (CS) superposée à la première (CI), ces couches de bobine(s) (CI, CS) formant un ensemble monolithique et intégré de plusieurs couches adjacentes respectivement supérieure et inférieure sur un même substrat.

2. Ensemble formant bobines selon la revendication 1, caractérisé en ce que les première et deuxième couches (CI, CS) comportent un nombre égal n de bobines, la ou les bobines (BI) de la première couche (CI) étant respectivement décalées angulairement sur le substrat (30) par rapport à la ou les bobines (BS) de la deuxième couche (CS) d'un angle (a) d'environ 180/n degrés.

3. Ensemble formant bobines selon la revendication 1 ou 2, caractérisé en ce que la borne extérieure (e1-4) de chaque bobine (BI₁₋₄) d'une des couches est reliée électriquement par une jonction "inter-plans" (60) à la borne intérieure (i5-8) de l'une des bobines (BS₅₋₈) de l'autre couche.

4. Ensemble formant bobines selon la revendication 3, caractérisé en ce que chaque jonction "inter-plans" (60) est reliée à une connexion électrique (Ci₅₋₈) s'étendant vers l'extérieur des bobines pour se terminer en une dérivation dont chaque branche (70) est reliée à un élément de commande (C₁₋₈).

5. Ensemble formant bobines selon la revendication 4, caractérisé en ce que ladite connexion électrique (Ci₅₋₈) est ménagée dans le même plan que les bobines (BI₁₋₄) à la borne extérieure desquelles elle est électriquement connectée.

6. Ensemble formant bobines selon la revendication 1 ou 2, dans lequel chaque couche comporte au moins deux bobines (n ≧ 2) caractérisé en ce que la borne extérieure de n-1 bobines (BS₁₆₋₁₈) de l'une (CS) des couches est reliée à la borne intérieure la plus proche de l'une de n-1 bobines correspondantes (BI ₁₁₋₁₄)de l'autre couche (CI), la borne extérieure des n bobines (BI₁₁₋₁₄) de cette autre couche (CI) étant reliée à la borne intérieure la plus proche de l'une des n bobines (BS₁₅₋₁₈) de la première couche (CS), la borne extérieure de l'une des bobines (BS₁₅) de la première couche (CS) et la borne intérieure de l'une des bobines (BI₁₂) de l'autre couche (CI) étant reliées à un élément de commande (C9) afin de former un montage en série des bobines.

7. Ensemble formant bobines selon la revendication 1 ou 2, caractérisé en ce que les bornes intérieures des bobines (BI₂₁₋₂₄, BS₂₅₋₂₈) de chaque couche sont reliées ensemble par des connexions électriques convergeant vers un point central du substrat et reliées par une jonction "inter-plans" (80) en ce point, l'une des bornes intérieures (i22) comportant une connexion électrique (82) s'étendant vers l'extérieur des bobines en étant reliée à un élément de commande (C₁₀), les bornes extérieures de toutes les bobines (BI₂₁₋₂₄, BS₂₅₋₂₈) étant reliées entre elles par une connexion électrique périphérique (84) qui entoure au moins partiellement les bobines et qui est reliée à l'élément de commande précité (C10) pour former un montage en parallèle des deux couches de bobines.

8. Ensemble formant bobines selon la revendication 1, caractérisé en ce que chaque bobine (BS₃₅₋₃₈) d'une des couches est disposée coaxialement à l'une des bobines (BI₃₁₋₃₄) de l'autre couche, les bobines (BS₃₅₋₃₈) d'une couche étant disposées de façon directement superposées sur les bobines (BI₃₁₋₃₄) de l'autre couche.

9. Procédé de fabrication d'un ensemble formant bobines d'excitation selon l'une des revendications 1 à 8, caractérisé en ce qu'il consiste à former sur une face (F1) du substrat semi-conducteur (30) par un processus photolithographique, une première couche de bobine(s) (BI) ainsi que simultanément certaines connexions électriques de la ou des bobines avec le circuit de commande et/ou avec une ou d'autres bobines, une ou plusieurs jonctions "inter-plans" (60), puis, de façon superposée à la première couche, une deuxième couche de bobine(s) (BS) ainsi que simultanément certaines connexions électriques de cette ou de ces bobines.

10. Procédé selon la revendication 9, caractérisé en qu'il consiste à former, en même temps que la première couche (CI) de bobine(s) (BI₁₋₄), les connexions électriques (Ci₅₋₈) de la seconde couche, et réciproquement, à former en même temps que la seconde couche (CS) les connexions électriques (Ci₁₋₄) de la première couche (CI) de bobine.

11. Micromoteur électromagnétique polyphasé équipé d'un ensemble formant bobines d'excitation selon l'une des revendications 1 à 8.

## Patentansprüche

1. Erregerspulen bildende Baugruppe, umfassend:
- ein Supportelement (30) in im wesentlichen ebener Form, gebildet von einem Halbleitersubstrat;
- mindestens eine erste ebene Spule (BI), hergestellt durch Metallisierung, zum Bilden einer ersten Schicht (CI) von Spulen nahe einer Seite (F1) des Substrats (30), dadurch gekennzeichnet, daß sie mindestens eine zweite ebene Spule (BS) umfaßt, die eine zweite Schicht von Spulen (CS) bildet, welche der ersten (CI) überlagert ist, welche Schichten von Spulen (CI, CS) eine monolithische und integrierte Baugruppe mehrerer benachbarter oberer bzw. unterer Schichten auf ein und demselben Substrat bilden.

2. Spulen bildende Baugruppe nach Anspruch 1, dadurch gekennzeichnet, daß die erste und die zweite Schicht (CI, CS) eine gleiche Anzahl n von Spulen umfassen, wobei die Spule(n) (BI) der ersten Schicht (CI) winkelversetzt sind auf dem Substrat (30) relativ zu der bzw. den Spule(n) (BS) der zweiten Schicht (CS) um einen Winkel (a) von etwa 180/n Grad.

3. Spulen bildende Baugruppe nach Anspruch 1 oder 2, dadurch gekennzeichnet, daß die äußere Klemme (e1-4) jeder Spule (BI₁₋₄) einer Schicht elektrisch verbunden wird mittels einer Durchkontaktierung (60) mit der inneren Klemme (i5-8) einer der Spulen (BS₅₋₈) der anderen Schicht.

4. Spulen bildende Baugruppe nach Anspruch 3, dadurch gekennzeichnet, daß jede Durchkontaktierung (60) verbunden ist mit einem elektrischen Anschluß (Ci₅₋₈), der sich in Richtung des äußeren der Spulen erstreckt, um in einer Verzweigung zu enden, von denen jeder Arm (70) mit einem Steuerelement (C₁₋₈) verbunden ist.

5. Spulen bildende Baugruppe nach Anspruch 4, dadurch gekennzeichnet, daß jede elektrische Verbindung (Ci₅₋₈) in derselben Ebene ausgeführt ist wie die Spulen (BI₁₋₄), an deren äußere Klemme sie elektrisch angeschlossen ist.

6. Spulen bildende Baugruppe nach Anspruch 1 oder 2, bei der jede Schicht mindestens zwei Spulen (n ≧ 2) umfaßt, dadurch gekennzeichnet, daß die äußere Klemme der n-1 Spulen (BS₁₆₋₁₈) einer (CS) der Schichten verbunden ist mit der inneren nächstgelegenen Klemme der einen von n-1 entsprechenden Spulen (BI₁₁₋₁₄) der anderen Schicht (CI), wobei die äußere Klemme der n-Spulen (BI₁₁₋₁₄) dieser anderen Schicht (CI) verbunden ist mit der inneren Klemme der nächstliegenden der n-Spulen (BS₁₅₋₁₈) der ersten Schicht (CS), und wobei die äußere Klemme einer der Spulen (BS₁₅) der ersten Schicht (CS) und die innere Klemme einer der Spulen (BI₁₂) der anderen Schicht (CI) mit einem Steuerelement (C9) verbunden sind, um eine Serienschaltung der Spulen zu bilden.

7. Spulen bildende Baugruppe nach Anspruch 1 oder 2, dadurch gekennzeichnet, daß die inneren Klemmen der Spulen (BI₂₁₋₂₄, BS₂₅₋₂₈) jeder Schicht über elektrische Verbindungen zusammengeschaltet sind, die zu einem zentralen Punkt des Substrats hin konvergieren und über eine Durchkontaktierung (80) an diesem Punkt verbunden sind, wobei eine der inneren Klemmen (i22) einen elektrischen Anschluß (82) umfaßt, der sich nach außen bezüglich der Spulen erstreckt und verbunden ist mit einem Steuerelement (C₁₀), wobei die äußeren Klemmen aller Spulen (BI₂₁₋₂₄, BS₂₅₋₂₈) miteinander durch einen peripheren elektrischen Anschluß (84) verbunden sind, der mindestens teilweise die Spulen umschließt und mit dem vorgenannten Steuerelement (C10) verbunden ist, um eine Parallelschaltung der beiden Spulenschichten zu bilden.

8. Spulen bildende Baugruppe nach Anspruch 1, dadurch gekennzeichnet, daß jede Spule (BS₃₅₋₃₈) einer der Schichten koaxial mit einer der Spulen (BI₃₁₋₃₄) der anderen Schicht ist, wobei die Spulen (BS₃₅₋₃₈) einer Schicht direkt überlagert sind den Spulen (BI₃₁₋₃₄) der anderen Schicht.

9. Verfahren zum Herstellen einer Erregerspulen bildenden Baugruppe nach einem der Ansprüche 1 bis 8, dadurch gekennzeichnet, daß es darin besteht, auf einer Seite (F1) des Halbleitersubstrats (30) durch einen photolithographischen Prozeß eine erste Spulenschicht (BI) sowie gleichzeitig bestimmte elektrische Verbindungen der Spule(n) mit dem Steuerschaltkreis und/oder mit einer oder anderen Spulen zu bilden, eine oder mehrere Durchkontaktierungen (60) zu bilden und danach überlagert der ersten Schicht eine zweite Spulenschicht (BS) zu bilden, wie auch gleichzeitig bestimmte elektrische Anschlüsse dieser Spule(n).

10. Verfahren nach Anspruch 9, dadurch gekennzeichnet, daß es darin besteht, gleichzeitig mit der ersten Schicht (CI) von Spule(n) (BI₁₋₄) die elektrischen Verbindungen (Ci₅₋₈) der zweiten Schicht und umgekehrt zu bilden und gleichzeitig mit der zweiten Schicht (CS) die elektrischen Verbindungen (Ci₁₋₄) der ersten Schicht (CI) von Spulen zu bilden.

11. Elektromagnetischer, mehrphasiger Mikromotor, ausgestattet mit einer Erregerspulen bildenden Baugruppe nach einem der Ansprüche 1 bis 8.

## Claims

1. Energization coil device comprising :
- a substantially planar support element (30) consisting of a semi-conductive substrate;
- at least one first planar coil (BI) produced by metallization to form a first layer (CI) of coils in the vicinity of one surface (F1) of the substrate (30), characterized in that it comprises at least one second planar coil (BS) forming a second layer (CS) of coil(s) superposed on the first (CI), said coil layers (CI, CS) forming a monolithic and integrated arrangement of several upper and lower adjacent layers on a common substrate.

2. Coil device according to claim 1, characterized in that the first and second layers (CI, CS) include an equal number n of coils, the coil(s) (BI) of the first layer (CI) being angularly offset respectively on the substrate (30) in relation to the coil(s) (BS) of the second layer (CS) by an angle (a) of about 180/n degrees.

3. Coil device according to claim 1 or 2, characterized in that the outer terminal (e1-4) of each coil (BI₁₋₄) of one of the layers is electrically connected by an "inter-planar" junction (60) to the inner terminal (i5-8) of one of the coils (BS₅₋₈) of the other layer.

4. Coil device according to claim 3, characterized in that each "inter-planar" junction (60) is connected to an electrical lead (ci₅₋₈) extending outwardly from the coils and terminated by a derivation, each branch of which (70) is connected to a control element (C₁₋₈).

5. Coil device according to claim 4, characterized in that said electrical lead (CI₅₋₈) is provided in the same plane as the coils (BI₁₋₄) to the outer terminal of which it is electrically connected.

6. Coil device according to claim 1 or 2, wherein each layer at least comprises two coils (n ≧ 2), characterized in that the outer terminal of n-1 coils (BS₁₆₋₁₈) of one (CS) of the layers is connected to the nearest inner terminal of a respective one of n-1 corresponding coils (BI₁₁₋₁₄) of the other layer (CI), the outer terminal of the n coils (BI₁₁₋₁₄) of said other layer (CI) being connected to the nearest inner terminal of one of the n coils (BS₁₅₋₁₈) of the first layer (CS), the outer terminal of one of the coils (BS₁₅) of the first layer (CS) and the inner terminal of one of the coils (BI₁₂) of the other layer (CI) being connected to a control element (C₉) to series connect the coils of the layers.

7. Coil device according to claim 1 or 2, characterized in that the inner terminals of the coils (BI₂₁₋₂₄, BS₂₅₋₂₈) of each layer are connected together by electrical leads converging towards a central point of the substrate and are connected by an "inter-planar" junction (80) at that point, one of the inner terminals (i22) having an electrical lead (82) extending outwardly from the coils and being connected to a control element (C₁₀), the outer terminals of all coils (BI₂₁₋₂₄, BS₂₅₋₂₈) being connected to one another by a peripheral electrical lead (84) that surrounds the coils at least partially and which is connected to the control element (C₁₀) to parallel connect the two layers of coils.

8. Coil device according to claim 1, characterized in that each coil (BS₃₅₋₃₈) of one of the layers is coaxially disposed in relation to one of the coils (BI₃₁₋₃₄) of the other layer, the coils (BS₃₅₋₃₈) of one layer being directly superposed on the coils (BI₃₁₋₃₄) of the other layer.

9. Method of producing an energization coil device according to one of claims 1 to 8, characterized in that it comprises forming on one surface (F1) of a semi-conductor substrate (30) by a photolithographic process, a first layer of coil(s) (BI) and simultaneously some of the electrical leads that connects the coil(s) with the control circuit and/or one or other coils, one or more "inter-planar" junctions (60), and then, superposed on the first layer, a second layer of coil(s) (BS) and simultaneously some electrical leads of said coil(s).

10. Method according to claim 9, characterized in that it comprises forming, at the same time as the first layer (CI) of coil(s) (BI₁₋₄), the electrical leads (Ci₅₋₈) of the second layer, and, conversely, forming at the same time as the second layer (CS) the electrical leads (Ci₁₋₄) of the first coil layer (CI).

11. Electromagnetic polyphased micromotor including an energization coil device according to one of claims 1 to 8.
